# EUROPÄISCHE PATENTSCHRIFT

(11) **EP 1 432 869 B1**
(45) Veröffentlichungstag und Bekanntmachung des Hinweises auf die Patenterteilung: **30.08.2006**
(21) Anmeldenummer: 02772225.5
(22) Anmeldetag: 29.08.2002
(51) Int. Cl.: D21F 3/00, D21F 7/08, D21F 1/10

(54) **TRÄGERGEWEBE FÜR PAPIERMASCHINENBESPANNUNGEN**
BACKING FABRIC FOR PAPER MACHINE CLOTHINGS
TISSU SUPPORT POUR HABILLAGES DE MACHINE A PAPIER

(30) Priorität: 10.09.2001 DE 10144307
(43) Veröffentlichungstag der Anmeldung: 30.06.2004
(73) Patentinhaber: Dorlastan Fibers & Monofil GmbH, 41538 Dormagen (DE)
(72) Erfinder: ONDER DE LINDEN, Thierry, 41539 Dormagen (DE); BÜDENBENDER, Jürgen, 41539 Dormagen (DE)
(74) Vertreter: Bramer-Weger, Elmar
(86) Internationale Anmeldenummer: PCT/EP2002/009624
(87) Internationale Veröffentlichungsnummer: WO 2003/023136

(56) Entgegenhaltungen:
- EP-A- 0 446 355
- DE-A- 19 941 593
- GB-A- 2 040 326
- US-A- 5 244 543

## Beschreibung

Die Erfindung betrifft Trägergewebe für Papiermaschinenfilze mit verbesserten Eigenschaften, vorzugsweise besserer Verschleißbeständigkeit und insbesondere verbesserter Dimensionsstabilität während der Papierfertigung (vgl. auch US-5 244 543 A).

Die Verfahren zur Herstellung von Monofilen aus thermoplastischen Polymeren sind grundsätzlich bekannt (vgl. Handbuch der Kunststofftechnik II, C. Hauser Verlag, München 1986, Seite 295 - 319).

Aus dem Lehrbuch der Papier- und Kartonerzeugung (VEB Fachbuchverlag 1987, Seite 190 ff) ist die Papierherstellung auf modernen Papiermaschinen mit Blattbildung (Formingpartie), mechanischer (Presspartie) und thermischer (Trockenpartie) Entwässerung, Glätten und Aufrollen bekannt.

Gewebe in der Formingpartie bestehen überwiegend aus Polyester-Monofilen. Zur Erhöhung der Abriebbeständigkeit werden auch Monofile aus Polyamiden zusammen mit Polyester-Monofilen im Wechselschuss auf der Maschinenseite eingesetzt.

In der Presspartie werden die Grundgewebe für die Pressfilze bzw. Nahtpressfilze fast ausschließlich aus Polyamidfasern und Polyamidmonofilen, vorzugsweise aus reinem Polyamid-6 aber auch aus Polyamid 66 hergestellt. Auf die aus PolyamidMonofilen bestehenden Grundgewebe wird in einer zweiten Verarbeitungsstufe eine Vliesschicht aus Polyamidfasern aufgenadelt und dabei diese Schicht mechanisch im Grundgewebe verankert.

Trockensiebe bestehen dagegen üblicherweise aus Polyester-Monofilen, die überwiegend mittels geeigneter Produkte, z.B. Stabaxol (ein Handelsprodukt der Fa. Rheinchemic, Mannheim) gegen hydrolytischen Abbau stabilisiert werden.

Die handelsüblichen Pressfilze aus Polyamid-6-Monofilen haben wegen der hohen Abriebbeständigkeit, Kompressibilität und der sehr guten Wiedererholung der Filze nach dem Passieren des Pressnips große Vorteile gegenüber Pressfilzen aus anderen Werkstoffen, z.B. Polypropylen, Polyester, Wolle oder anderen Polyamidtypen (z.B. PA 6. 10, PA 6.12)

Ein wesentlicher Nachteil dieser Pressfilze ist jedoch die mangelnde Dimensionsstabilität im Falle von Maschinenstillständen. Die Werkstoffe Polyamid-6 und Polyamid-66 nehmen in feuchter Umgebung bis zu 10 Gew.-% Wasser auf. Mit der Wasseraufnahme verändern die Monofile ihre Länge und Dicke. Insbesondere die Längenänderung führt dazu, dass die Filze im Fall von Störungen oder Stillständen der Papiermaschine mit anderen Ursachen in den feuchten Zonen eine andere Breite und Gewebedichte aufweisen als in den trockeneren Zonen. Nach der Beseitigung der Störungen und dem Wiederanfahren der Papiermaschine lässt sich mit diesen Filzen solange keine erstklassige Papierqualität erzeugen, bis die Filze wieder auf der gesamten Fläche den gleichen Wassergehalt und die gleiche Dichte bzw. Breite erreicht haben.

Darüber hinaus führt die Breitenänderung häufig dazu, dass die voll Arbeitsbreite der Papiermaschine nicht ausgenutzt werden kann, weil die Filze sich über die maximale Breite der Maschine ausdehnen und an den Rändern beschädigt werden.

Es hat daher nicht an Versuchen gemangelt, die Dimensionsstabilität von Pressfilzen bei Feuchte/Trockenzyklen zu verbessern.

Eine Möglichkeit ist die Verwendung anderer Gewebekonstruktionen.

Weit verbreitet ist die Verwendung anderer Werkstoffe in der Kette der Gewebe, beispielsweise der Ersatz von Polyamid-6 bzw. Polyamid-66-Monofilen durch solche, die bei hoher Umgebungsfeuchtigkeit wesentlich weniger Feuchtigkeit aufnehmen und die Dimension der Gewebe infolge dessen nur geringfügig ändern. Bewährt haben sich Monofile aus Polyamid 6.10 und Polyamid 6.12.

Ein Nachteil dieser Gewebe bzw. der daraus hergestellten Filze ist jedoch die deutlich geringere Verschleißbeständigkeit beim Gebrauch auf Papiermaschinen gegenüber den Geweben aus Polyamid-6-Monofilen bzw. daraus hergestellten Filzen.

Überraschend wurde nun gefunden, dass sich die Nachteile der mangelnden Verschleißbeständigkeit vermeiden und mit den Vorteilen einer guten Dimensionsstabilität verbinden lassen, wenn die Kette der Grundgewebe aus Kombinationszwirnen besteht, die sowohl Monofile aus Polyamid-6 als auch Monofile aus Polyamid 6.10 bzw. Polyamid 6.12 enthalten.

Die Aufgabe der Erfindung wird dadurch gelöst, dass bei der Herstellung des Trägergewebes in der Kette anstatt Zwirnen aus Polyamid-6-Monofilen solche aus Kombinationszwirnen mit 1 - 20 Monofilen aus Polyamid-6 und 20 - 1 Monofilen aus Polyamid 6.10, Polyamid 6.12, Polyamid 11 oder Polyamid 12 verwendet werden.

Die so hergestellten Gewebe haben darüber hinaus auch einen beträchtlich höheren wirtschaftlichen Nutzen, denn die Rohstoffe Polyamid-6 und Polyamid-66 sind technisch leichter verfügbar und lassen sich in vielen Recyclingeinrichtungen nach der wirtschaftlichen Verwertung wieder verwenden.

Ein besonderer Vorteil des erfindungsgemäßen Verfahrens besteht darin, Zwirne aus einer geraden Anzahl der verwendeten Werkstoffe aber auch eine ungerade Anzahl dieser Werkstoffe miteinander zu verzwirnen. Dadurch lassen sich gezielte, berechenbare Dimensionsänderungen der Zwirne, bzw. der daraus hergestellten Gewebe einstellen und ggf. lässt sich der wirtschaftliche Nutzen steigern.

Die nachfolgenden Beispiele belegen die erfindungsgemäßen Vorteile der Kombinationszwirne ohne die Möglichkeiten der Kombinationen zu begrenzen.

### Beispiele

### Monofilament

| | Handelsprodukt | Durchmesser |
|---|---|---|
| Polyamid 6 | X 201, | 0,20 mm |
| Polyamid 6.10, | ATF 2311 1 | 0,20 mm |
| Polyamid 6.12 | ATF 23 | 0,20 mm |

### Hersteller: Bayer Faser GmbH

### Vorzwirne

Auf einer Zwirnmaschine des Typs Allma Saurer AZB-T wurden Vorzwirne der Konstruktion 0,20 mm x 2 mit 304 Umdrehungen/Meter hergestellt
Versuchsteil V 1: X 201/X 201, 0,20 mm x 2, S 304 Touren/Meter
Versuchsteil V 2: X 201/ATF 2311, 0,20 mm x 2, S 304 Touren/Meter
Versuchsteil V 3: ATF 2311, 0,20 mm x 2, S 304 Touren/Meter
Versuchsteil V 4: ATF 2300, 0,20 mm x 2, S 304 Touren/Meter

### Vergleichsbeispiel 1

Vorzwirne aus Polyamid 6, Versuchsteil V1 wurden auf einer Zwirnmaschine des Typs Allma Saurer AZB-T zu einem balancierten Ringzwirn der Konstruktion 0,20 mm x 2 x 2 mit S 304/Z 260 Drehungen verarbeitet.

Der Zwirn wurde anschließend in einem Wärmeschrank 5 Minuten bei 160°C spannungslos fixiert und auf Stücke einer Länge von 1,00 m geschnitten. Die exakte Länge und das Gewicht der Musterstücke wurde ermittelt. Im Anschluss daran wurden die Muster 24 Stunden spannungslos in einem Wasserbad bei 20°C gelagert, aus dem Wasser entnommen, abgetrocknet und die Längenänderung gemessen sowie das Gewicht ermittelt.

Danach wurde der Zwirn 24 Stunden in einem Umluft-Trockenschrank 24 Stunden bei 80°C getrocknet und abermals die Längenänderung und der Gewichtsverlust ermittelt. Dieser Zyklus wurde dreimal wiederholt. Die Längenänderungen zwischen den Nass/Trockenzyklen sind in Tabelle 1 zusammengestellt.

Die Abriebbeständigkeit der Zwirne wurde nach einem eigen entwickelten Abriebtest ermittelt. Dabei werden die Monofile bzw. Zwirne zyklisch über eine Schleifwalze mit definierter Last gezogen, bis sie reißen. Die Anzahl der Reibzyklen ist ein Maß für die Abriebbeständigkeit.

### Vergleichsbeispiel 2

Vorzwirne aus Polyamid 6.10 (ATF 2311), Versuchsteil V 3, 0,20 mm wurden zu einem Ringzwirn verarbeitet, wie in Vergleichsbeispiel 1 beschrieben. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst.

### Beispiel 1

Vorzwirn V 1 und Vorzwirn V 2 wurden zu einem Ringzwirn wie im Vergleichsbeispiel 1 beschrieben, verarbeitet. Der Ringzwirnhatte einen Anteil an PA 6.10 von 25 %. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst.

### Beispiel 2

Vorzwirn V 1 und Vorzwirn V 3 wurden zu einem Ringzwirn wie im Vergleichsbeispiel 1 beschrieben, verarbeitet. Der Ringzwirn hatte einen Anteil an PA 6.10 von 50 %. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst

### Beispiel 3

Vorzwirn V 2 und Vorzwirn V 2 wurden zu einem Ringzwirn wie im Vergleichsbeispiel 1 beschrieben, verarbeitet. Der Ringzwirn hatte einen Anteil an PA 6.10 von 50 %. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst

### Beispiel 4

Vorzwirn V 3 und Vorzwirn V 2 wurden zu einem Ringzwirn wie im Vergleichsbeispiel 1 beschrieben, verarbeitet. Der Ringzwirn hatte einen Anteil an PA 6.10 von 75 %. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst

### Beispiel 5

Vorzwirn V 4 und Vorzwirn V 1 wurden zu einem Ringzwirn wie im Vergleichsbeispiel 1 beschrieben, verarbeitet. Der Ringzwirn hatte einen Anteil an PA 6.12 von 50 %. Die Längenänderung nach Feuchte/Trocken Wechselzyklen sowie das Abriebverhalten wurde ebenso ermittelt, wie in Vergleichsbeispiel 1 beschrieben. Die Ergebnisse sind in der Tabelle 1 zusammengefasst.

**Tabelle 1**

| | Anteil PA 6 | Anteil PA 6.10 | Wasseraufnahme¹⁾ | Wasserlängung¹⁾ | Abriebverhalten Min - max |
|---|---|---|---|---|---|
| | % | % | % | % | Zyklen |
| Vergleichsbeispiel 1 | 100 | 0 | 6,8 | 3,0 | 260 - 350 |
| Vergleichsbeispiel 2 | 0 | 100 | 2,8 | 1,2 | 220 - 290 |
| Beispiel 1 | 75 | 25 | 6,0 | 2,7 | 260 - 320 |
| Beispiel 2 | 50 | 50 | 5,2 | 2,0 | 250 - 295 |
| Beispiel 3 | 50 | 50 | 4,9 | 1,9 | 255 - 305 |
| Beispiel 4 | 25 | 75 | 3,8 | 1,6 | 225 - 290 |
| | | Anteil PA 6.12 | | | |
| Beispiel 5 | 50 | 50 | 5,1 | 2,1 | 245-300 |

| | | | | | |
|---|---|---|---|---|---|
| ¹⁾ Mittelwert aus drei Mess-Zyklen | | | | | |

## Patentansprüche

1. Trägergewebe für Papiermaschinenbespannungen, **dadurch gekennzeichnet, dass** das Basisgewebe der Papiermaschinen-Bespannung in Querrichtung zum Lauf der Papiermaschine, die Kette bei der Herstellung des Basisgewebes, aus Kombinationszwirnen aus Monofilen, hergestellt aus Polyamid 6 und Monofilen aus Polyamid 6.10 besteht.

2. Trägergewebe für Papiermaschinenbespannungen, **dadurch gekennzeichnet, dass** das Basisgewebe der Papiermaschinen-Bespannung in Querrichtung zum Lauf der Papiermaschine, Kette, aus Kombinationszwirnen, hergestellt aus Monofilen von Polyamid 6 und Monofilen aus Polyamid 6.12, Polyamid 11 oder Polyamid 12 besteht.

3. Trägergewebe nach Anspruch 1, **dadurch gekennzeichnet, dass** die Zwirne 1 bis 20 Monofilamente aus Polyamid 6 und von 20 bis 1 Monofilamente aus Polyamid 6.10 enthalten, bevorzugt 1 bis 6 Monofilamente aus Polyamid 6 und 6 bis 1 Monofilamente aus Polyamid 6.10.

4. Trägergewebe nach Anspruch 2, **dadurch gekennzeichnet, dass** die Zwirne 1 bis 20, bevorzugt 1 bis 6 Monofilamente aus Polyamid 6 und 20 bis 1, bevorzugt 6 bis 1 Monofilamente aus Polyamid 6.12, Polyamid 11 oder Polyamid 12 enthalten

5. Trägergewebe nach einem der Ansprüche 1 bis 4, **dadurch gekennzeichnet, dass** die Monofilamente der Grundgewebe einen Durchmesser von 0,08 bis 0,3 mm haben.

6. Verfahren zur Herstellung von Basisgeweben von Papiermaschinenbespannungen, **dadurch gekennzeichnet, dass** Monofilamente aus Polyamid 6 mit Monofilamenten aus Polyamid 6.10, Polyamid 6.12, Polyamid 11 oder Polyamid 12 zu einem Kombinationszwirn verarbeitet werden und der Kombinationszwirn als Kette in Querrichtung zum lauf der Papiermaschine bei der Herstellung des Basisgewebes eingesetzt wird.

## Claims

1. Backing fabric for papermaking machine covering materials, **characterised in that** the base fabric of the papermaking machine covering material comprises combination twisted yarns of monofilaments of polyamide 6 and monofilaments of polyamide 6.10, in the transverse direction to the run of the papermaking machine, the warp in the production of the base fabric.

2. Backing fabric for papermaking machine covering materials, **characterised in that** the base fabric of the papermaking machine covering material comprises combination twisted yarns of monofilaments of polyamide 6 and monofilaments of polyamide 6.12, polyamide 11 or polyamide 12 in the transverse direction to the run of the papermaking machine, warp.

3. Backing fabric according to Claim 1, **characterised in that** the twisted yarns contain 1 to 20 monofilaments of polyamide 6 and 20 to 1 monofilaments of polyamide 6.10, preferably 1 to 6 monofilaments of polyamide 6 and 6 to 1 monofilaments of polyamide 6.10.

4. Backing fabric according to Claim 2, **characterised in that** the twisted yarns contain 1 to 20, preferably 1 to 6, monofilaments of polyamide 6 and 20 to 1, preferably 6 to 1, monofilaments of polyamide 6.12, polyamide 11 or polyamide 12.

5. Backing fabric according to any one of Claims 1 to 4, **characterised in that** the monofilaments of the base fabrics have a diameter of 0.08 to 0.3 mm.

6. Process for the production of base fabrics of papermaking machine covering materials, **characterised in that** polyamide 6 monofilaments with monofilaments of polyamide 6.10, polyamide 6.12, polyamide 11 or polyamide 12 are processed to form a combination twisted yarn and the combination twisted yarn is used as warp in the transverse direction to the run of the papermaking machine in the production of the base fabric.

## Revendications

1. Tissu support pour des entoilages de machines à papier, **caractérisé en ce que** le tissu de base de l'entoilage des machines à papier est constitué, dans le sens transversal par rapport à l'avancement de la machine à papier, la chaîne lors de la fabrication du tissu de base, est constitué par des fils combinés de monofils produits à partir de polyamide 6 et de monofils en polyamide 6.10.

2. Tissu support pour des entoilages de machines à papier, **caractérisé en ce que** le tissu de base de l'entoilage des machines à papier dans le sens transversal par rapport à l'avancement de la machine à papier, la chaîne, est constitué par des fils combinés préparés à partir de monofils en polyamide 6 et de monofils en polyamide 6.12, en polyamide 11 ou en polyamide 12.

3. Tissu support selon la revendication 1, **caractérisé en ce que** les fils contiennent 1 à 20 monofilaments en polyamide 6 et 20 à 1 monofilaments en polyamide 6.10, de préférence 1 à 6 monofilaments en polyamide 6 et 6 à 1 monofilaments en polyamide 6.10.

4. Tissu support selon la revendication 2, **caractérisé en ce que** les fils contiennent 1 à 20, de préférence 1 à 6 monofilaments en polyamide 6 et 20 à 1, de préférence 6 à 1 monofilaments en polyamide 6.12, polyamide 11 ou polyamide 12.

5. Tissu support selon l'une quelconque des revendications 1 à 4, **caractérisé en ce que** les monofilaments du tissu de base présentent un diamètre de 0,08 à 0,3 mm.

6. Procédé de fabrication de tissus de base d'entoilages de machines à papier, **caractérisé en ce que** des monofilaments en polyamide 6 sont transformés avec des monofilaments en polyamide 6.10, polyamide 6.12, polyamide 11 ou polyamide 12 en un fil combiné et que le fil combiné est utilisé comme chaîne dans le sens transversal par rapport à l'avancement de la machine à papier lors de la, fabrication du tissu de base.
